# EUROPEAN PATENT APPLICATION

(11) **EP 4 510 319 A1**
(43) Date of publication of application: **19.02.2025**
(21) Application number: 22942309.0
(22) Date of filing: 14.07.2022
(51) Int. Cl.: H01M 50/107

(54) **SHELL, BATTERY CELL, BATTERY, AND ELECTRIC DEVICE**

(30) Priority: 20.05.2022 CN 202221231517 U
(71) Applicant: Contemporary Amperex Technology Co., Limited, Ningde, Fujian 352100 (CN)
(72) Inventor: SUN, Dongsheng, Ningde, Fujian 352100 (CN); CHI, Qingkui, Ningde, Fujian 352100 (CN); CHAI, Zhisheng, Ningde, Fujian 352100 (CN); JIN, Haizu, Ningde, Fujian 352100 (CN)
(74) Representative: Rowlands, Stuart Michael
(86) International application number: PCT/CN2022/105802
(87) International publication number: WO 2023/221278

(57) **Abstract**

The present application relates to the technical field of batteries. Provided are a shell, a battery cell, a battery and an electric device. The shell comprises a bottom wall and a side wall, wherein the side wall is arranged around the periphery of the bottom wall; and an outer surface of the bottom wall is connected to an outer surface of the side wall by means of a first rounded surface, the thickness of the bottom wall being a, and the radius of the first rounded surfaces being R1, satisfying R1/a ≤ 10. The size of a transition surface between an inner surface of the bottom wall and an inner surface of the side wall can be within a reasonable range, such that the size of space at a corner between the bottom wall and the side wall is within a reasonable range, thereby avoiding excessive wasting of space inside the shell and being conducive to improving the energy density of the battery cell.

## Description

### CROSS-REFERENCE TO RELATED APPLICATIONS

This application claims priority to Chinese Patent Application No. 202221231517.8, filed on May 20, 2022 and entitled "SHELL, BATTERY CELL, BATTERY, AND ELECTRIC DEVICE", which is incorporated herein by reference in its entirety.

### TECHNICAL FIELD

This application relates to the technical field of batteries, and in particular, to a shell, a battery cell, a battery, and an electric device.

### BACKGROUND

Currently, with the rapid development of smartphones, tablet computers, electric vehicles, and the like, and more widespread applications of lithium-ion batteries, higher requirements are proposed for the lithium-ion battery. For example, the battery is required to have high energy density, so that the lithium battery has a better battery life. Therefore, how to improve the energy density of the battery has become an urgent problem to be resolved in the technical field of batteries.

### SUMMARY

Embodiments of this application provide a shell, a battery cell, a battery, and an electric device, to improve energy density of the battery.

According to a first aspect, embodiments of this application provide a shell. The shell includes a bottom wall and a side wall, where the side wall encloses an outer periphery of the bottom wall, an outer surface of the bottom wall and an outer surface of the side wall are connected by a first rounding surface, a thickness of the bottom wall is a, and a radius of the first rounding surface is R₁ that satisfies: R₁/a ≤ 10.

In the above technical solution, the outer surface of the bottom wall and the outer surface of the side wall are connected by the first rounding surface. The first rounding surface extends from the outer surface of the bottom wall to the outer surface of the side wall. If a ratio of the radius R₁ of the first rounding surface to the thickness a of the bottom wall is too large, accordingly, a size of a transition surface between an inner surface of the bottom wall and an inner surface of the side wall is large, which may be understood as that space of a corner between the bottom wall and the side wall is large. Because an electrode assembly is often not in contact with a curved surface at the corner, the space of the corner is wasted, and consequently space inside the shell cannot be fully utilized, which reduces energy density of a battery cell. Nevertheless, as R₁/a ≤ 10, the size of the transition surface between the inner surface of the bottom wall and the inner surface of the side wall can be within a reasonable range, so that a size of the space of the corner between the bottom wall and the side wall is within a reasonable range, thereby avoiding excessive waste of the space inside the shell, and helping increase the energy density of the battery cell.

In some embodiments of the first aspect of this application, R₁/a ≥ 1.2.

In the above technical solution, as R₁/a ≥ 1.2, material accumulation at a transition position between the inner surface of the side wall and the inner surface of the side wall can be reduced or avoided, and a risk of deformation of the bottom wall caused by excessive material accumulation at the transition position between the inner surface of the side wall and the inner surface of the side wall and by squeezing toward a side of the bottom wall can also be reduced.

In some embodiments of the first aspect of this application, 0.8 mm ≤ R₁ ≤ 12 mm.

In the above technical solution, the first rounding surface R1 satisfies: 0.8 mm ≤ R₁ ≤ 12 mm, which facilitates processing and manufacturing of the first rounding surface, and enables a molded shell to meet practical application requirements.

In some embodiments of the first aspect of this application, 1 mm ≤ R₁ ≤ 1.5 mm.

In the above technical solution, the first rounding surface R1 satisfies: 1 mm ≤ R₁ ≤ 1.5 mm, which facilitates processing and manufacturing of the first rounding surface, and enables the molded shell to meet practical application requirements.

In some embodiments of the first aspect of this application, 0.4 mm ≤ a ≤ 1 mm.

In the above technical solution, the thickness a of the bottom wall satisfies: 0.4 mm ≤ a ≤ 1 mm, which can ensure that the shell has good structural strength and facilitates formation of the first rounding surface.

In some embodiments of the first aspect of this application, an arc length of the first rounding surface is L₁ that satisfies: 1.5 mm ≤ L₁ ≤ 4.7 mm.

In the above technical solution, the arc length L1 of the first rounding surface satisfies: 1.5 mm ≤ L₁ ≤ 4.7 mm, which facilitates processing and molding of the first rounding surface.

In some embodiments of the first aspect of this application, the first rounding surface has a first end portion connected to the outer surface of the side wall, and an angle between a tangent plane of the first end portion of the first rounding surface and the outer surface of the side wall is θ that satisfies: θ ≤ 30°.

In the above technical solution, the angle between the tangent plane of the first end portion of the first rounding surface and the outer surface of the side wall is less than or equal to 30°, so that a sharp angle between the first rounding surface and the outer surface of the side wall is reduced, thereby providing good smoothness between the first rounding surface and the outer surface of the side wall.

In some embodiments of the first aspect of this application, a thickness of the side wall is b that satisfies: 0.2 mm ≤ b ≤ 0.8 mm.

In the above technical solution, the thickness b of the side wall satisfies: 0.2 mm ≤ b ≤ 0.8 mm, which can ensure that the side wall of the shell has good structural strength.

In some embodiments of the first aspect of this application, an inner surface of the bottom wall and an inner surface of the side wall are connected by a second rounding surface.

In the above technical solution, the inner surface of the bottom wall and the inner surface of the side wall are connected by the second rounding surface, so that the bottom wall and the side wall can have a smooth transition, and a risk of stress concentration is reduced.

In some embodiments of the first aspect of this application, a radius of the second rounding surface is R₂, where 0.4 mm ≤ R₂ ≤ 1.2 mm.

In the above technical solution, the radius R2 of the second rounding surface satisfies 0.4 mm ≤ R₂ ≤ 1.2 mm, which facilitates processing and molding of the second rounding surface, and enables the size of the space of the corner between the bottom wall and the side wall to be within a reasonable range, so as to avoid waste of the space inside the shell.

In some embodiments of the first aspect of this application, 0.5 mm ≤ R₂ ≤ 1 mm.

In the above technical solution, the radius R₂ of the second rounding surface satisfies 0.5 mm ≤ R₂ ≤ 1 mm, which facilitates processing and molding of the second rounding surface, and further reduces the size of the space of the corner between the bottom wall and the side wall, so as to avoid waste of the space inside the shell.

In some embodiments of the first aspect of the application, an arc length of the second rounding surface is L₂ that satisfies: 0.7 mm ≤ L₂ ≤ 3.2 mm.

In the above technical solution, the arc length L₂ of the second rounding surface satisfies: 0.7 mm ≤ L₂ ≤ 3.2 mm, so that processing of the second rounding surface is easier.

In some embodiments of the first aspect of this application, the shell includes a main body layer and an antioxidant layer, and the antioxidant layer is provided on an outer surface of the main body layer.

In the above technical solution, the antioxidant layer is provided on the outer surface of the main body layer, so as to provide the main body layer with good antioxidant performance, thereby improving an anti-corrosion capability of the shell.

In some embodiments of the first aspect of this application, the inner surface of the bottom wall and the inner surface of the side wall are connected by the second rounding surface, the first rounding surface is formed on an outer surface of the antioxidant layer, and the second rounding surface is formed on an inner surface of the main body layer; and the arc length L₁ of the first rounding surface and the arc length L₂ of the second rounding surface satisfy: 1 ≤ L₁/L₂ ≤ 1.6.

In the above technical solution, the arc length L₁ of the first rounding surface and the arc length L₂ of the second rounding surface satisfy 1 ≤ L₁/L₂ ≤ 1.6, which can ensure that the antioxidant layer does not crack during molding of the first rounding surface and the second rounding surface.

In some embodiments of the first aspect of this application, the shell is of a cylindrical structure.

In the above technical solution, the size of the space at the corner between the bottom wall and the side wall of the shell of the cylindrical structure is within a reasonable range, thereby avoiding excessive waste of the space inside the shell, and helping increase the energy density of the battery cell.

According to a second aspect, embodiments of this application provide a battery cell. The battery cell includes the shell according to embodiments of the first aspect and an electrode assembly, where the electrode assembly is accommodated in the shell.

In the above technical solution, a size of space at a corner between a bottom wall and a side wall of a shell of the battery cell with the shell according to any embodiment of the first aspect is within a reasonable range, thereby avoiding excessive waste of space inside the shell, and helping increase energy density of the battery cell.

In some embodiments of the second aspect of this application, the shell has an opening provided opposite to a bottom wall, the battery cell further includes an end cap, and the end cap is used for capping the opening.

In the above technical solution, the shell is provided with the opening, to facilitate assembly of the electrode assembly into the shell. After the electrode assembly is accommodated in the shell, the opening can be capped by the end cap to improve sealing and security of the battery cell.

In some embodiments of the second aspect of this application, the battery cell further includes an electrode terminal, the bottom wall is provided with an electrode extraction hole, the electrode terminal is provided in the electrode extraction hole in an insulated manner, the electrode terminal is used for electrically connecting to a first tab of the electrode assembly, the bottom wall is electrically connected to a second tab of the electrode assembly, and polarity of the first tab is opposite to that of the second tab.

In the above technical solution, the electrode terminal is electrically connected to the first tab and serves as a first output electrode of the battery cell, the second tab of which polarity is opposite to that of the first tab is electrically connected to the bottom wall to enable the bottom wall to serve as a second output electrode of the battery cell, and the bottom wall and the electrode terminal are located at the same end of the battery cell. In this way, the first tab and the second tab can be located at the same side of the battery cell, which simplifies an assembly process and improves efficiency of connecting a plurality of battery cells in series, in parallel, or in a mixed manner as a battery module.

According to a third aspect, embodiments of this application provide a battery. The battery includes the battery cell provided in the embodiments of the second aspect.

According to a fourth aspect, embodiments of this application provide an electric device. The electric device includes the battery cell provided in the embodiments of the second aspect.

### BRIEF DESCRIPTION OF DRAWINGS

To describe the technical solutions in embodiments of this application more clearly, the following outlines the drawings to be used in embodiments. It should be understood that the drawings below are merely some embodiments of this application and should therefore not be regarded as limiting the scope. A person of ordinary skill in the art may derive other related drawings from such drawings without making any creative efforts.
FIG. 1 is a schematic structural diagram of a vehicle according to some embodiments of this application;
FIG. 2 is a schematic structural diagram of a battery according to some embodiments of this application;
FIG. 3 is an exploded view of a battery cell according to some embodiments of this application;
FIG. 4 is a partial sectional view of a shell according to an embodiment of this application;
FIG. 5 is a sectional view of a shell according to other embodiments of this application; and
FIG. 6 is an enlarged view of A in FIG. 5.

Reference numerals: 1000-vehicle; 100-battery; 10-case; 11-mounting space; 12-first portion; 13-second portion; 20-battery cell; 21-shell; 211-bottom wall; 2111-electrode extraction hole; 2112-outer surface of the bottom wall; 2113-inner surface of the bottom wall; 2114-second main body layer; 2115-second antioxidant layer; 212-side wall; 2121-outer surface of the side wall; 2122-inner surface of the side wall; 2123-third main body layer; 2124-third antioxidant layer; 213-opening; 214-transition wall; 2141-first rounding surface; 2142-second rounding surface; 2143-first main body layer; 2144-first antioxidant layer; 215-main body layer; 216-antioxidant layer; 22-electrode assembly; 221-main body portion; 222-first tab; 223-second tab; 24-electrode terminal; 25-first current collection member; 26-second current collection member; 27-first insulating member; 28-end cap; 200-controller; and 300-motor.

### DETAILED DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. It will be apparent that the described embodiments are merely some rather than all of embodiments of this application. Generally, components of embodiments of this application described and illustrated in the accompanying drawings herein may be arranged and designed in various different configurations.

Accordingly, the following detailed descriptions of embodiments of this application provided in the accompanying drawings are not intended to limit the scope of this application for which protection is claimed, but rather represent only selected embodiments of this application. Based on the embodiments in this application, all other embodiments derived by a person of ordinary skill in the art without creative work shall fall within the scope of protection of this application.

It is hereby noted that where there is no conflict, the embodiments in this application and the features in the embodiments may be mutually combined.

It should be noted: Similar symbols and letters denote similar items in the following accompanying drawings, so that once an item is defined in one accompanying drawing, no further definition or explanation of the item is required in the subsequent accompanying drawings.

In the descriptions of embodiments of this application, it should be noted that indication of orientations or positional relationships is based on orientations or positional relationships shown in the accompanying drawings, or orientations or positional relationships in which the product of the application is customarily placed in use, or orientations or positional relationships customarily understood by a person skilled in the art, is intended only for the purpose of facilitating the descriptions of this application and to simplify the descriptions, and does not indicate or imply that the apparatus or element referred to must have a particular orientation or be constructed and operated in a particular orientation, and therefore is not to be construed as a limitation of this application. In addition, the terms "first", "second", "third", and the like are used only for the purpose of differentiating descriptions and are not to be understood as indicating or implying relative importance.

Currently, from a perspective of market development, application of traction batteries is becoming more and more extensive. The traction battery is not only applied to energy storage power systems such as hydroelectric, thermal, wind, and solar power stations, but is also widely used in electric transportation vehicles such as electric bicycles, electric motorcycles, and electric vehicles, as well as in various fields such as military equipment and aerospace. As application fields of the traction battery continue to expand, a market demand of the traction battery also expands.

A battery cell includes a shell and an electrode assembly accommodated in the shell. The shell includes a bottom wall and a side wall, and an outer surface of the bottom wall and an outer surface of the side wall are transitionally connected by a first rounding surface.

The inventors find that if a ratio of a radius R₁ of the first rounding surface to a thickness a of the bottom wall is too large, accordingly, a size of a transition surface of an inner surface of the bottom wall and an inner surface of the side wall is large, which may be understood as that space of a corner between the bottom wall and the side wall is large. To avoid wrinkling of an electrode plate of the electrode assembly caused by squeezing between the electrode assembly and the corner, the electrode assembly is often not in contact with a curved surface of the corner, and consequently the space of the corner is wasted, which reduces energy density of the battery cell.

Based on the above considerations, in order to fully utilize space inside the shell of the battery cell to improve the energy density of the battery cell, the inventors design a shell through thorough research, with the ratio R₁/a of the radius R₁ of the first rounding surface of the shell to the thickness a of the bottom wall satisfying: R₁/a ≤ 10.

As R₁/a ≤ 10, the size of the transition surface between the inner surface of the bottom wall and the inner surface of the side wall can be within a reasonable range, so that a size of the space of the corner between the bottom wall and the side wall is within a reasonable range, thereby avoiding excessive waste of the space inside the shell, and helping increase the energy density of the battery cell.

The shell disclosed in embodiments of this application can be used in the battery cell, and can also be used in other fields to accommodate other structures. The battery cell having the shell provided in embodiments of this application may be, but is not limited to, used in an electric device such as a vehicle, a ship, or an aircraft. The battery cell, a battery, and the like having the shell disclosed in this application can be used to form a power supply system of the electric device, which helps increase the energy density of the battery cell, energy density of the battery, and the like.

Embodiments of this application provide an electric device using a battery as a power supply, and the electric device may be, but is not limited to, a cell phone, a tablet, a laptop computer, an electric toy, an electric tool, an electric scooter, an electric car, a ship, a spacecraft, and the like. The electric toy may include a fixed or mobile electric toy, for example, a game console, an electric toy car, an electric toy ship, and an electric toy airplane. The spacecraft may include an airplane, a rocket, a space shuttle, a spaceship, and the like.

The following embodiments are illustrated as an example of the electric device as a vehicle of an embodiment of this application for the convenience of illustration.

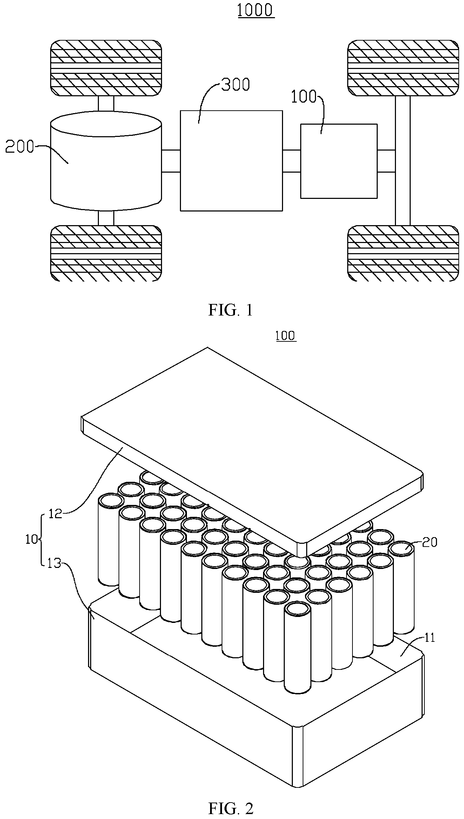

Referring to FIG. 1, FIG. 1 is a schematic structural diagram of a vehicle 1000 provided according to some embodiments of this application. The vehicle 1000 is provided with a battery 100 inside, and the battery 100 may be disposed at a bottom or head or tail of the vehicle 1000. The battery 100 may be configured to supply power to the vehicle 1000. For example, the battery 100 may be used as an operational power supply for the vehicle 1000.

The vehicle 1000 may also include a controller 200 and a motor 300, and the controller 200 is configured to control the battery 100 to power the motor 300, such as for the working power needs of the vehicle 1000 during start-up, navigation, and travelling.

In some embodiments of this application, the battery 100 may serve not only as the operational power supply of the vehicle 1000, but also as a driving power supply of the vehicle 1000, replacing or partially replacing fuel or natural gas to provide driving power for the vehicle 1000.

FIG. 2 is a schematic structural diagram of a battery 100 according to some embodiments of this application. The battery 100 includes a case 10 and a battery cell 20, and the battery cell 20 is accommodated within the case 10.

The case 10 is used to provide mounting space 11 for the battery cell 20. In some embodiments, the case 10 may include a first portion 12 and a second portion 13, where the first portion 12 caps the second portion 13, to define the mounting space 11 for accommodating the battery cell 20. Of course, a junction between the first portion 12 and the second portion 13 may be sealed by a sealing member (not shown in the figures), which may be a sealing ring, a sealing gum, or the like.

The first portion 12 and the second portion 13 may be in various shapes, such as rectangular and cylindrical. The first portion 12 may be of a hollow structure with an opening on one side to form an accommodating cavity for accommodating the battery cell 20, and the second portion 13 may also be of a hollow structure with an opening on one side to form the accommodating cavity for accommodating the battery cell 20. When the opening side of the first portion 12 caps the opening side of the second portion 13, the case 10 with the mounting space 11 is formed. Of course, as shown in FIG. 2, it is also possible that the first portion 12 is of a hollow structure with an opening on one side to form an accommodating cavity for accommodating the battery cell 20, and the second portion 13 is of a plate structure. When the opening side of the first portion 12 caps the second portion 13, the case 10 with the mounting space 11 is formed.

In the battery 100, there may be one or more battery cells 20. If there are a plurality of battery cells 20, the plurality of battery cells 20 may be connected in series, in parallel, or in a mixed connection, and the mixed connection means that the plurality of battery cells 20 are connected in series and in parallel. The plurality of battery cells 20 may be directly connected in series, in parallel, or in a mixed connection, and then a whole formed by the plurality of battery cells 20 is accommodated in the case 10; of course, it is also possible that the plurality of battery cells 20 are first connected in series or in parallel or in a mixed connection to form battery modules, and then a plurality of battery modules are connected in series or in parallel or in a mixed connection to form a whole that is accommodated in the case 10. The battery cell 20 may be in a cylindrical shape, a flat shape, a cuboid shape, or another shape. FIG. 2 illustrates a case in which the battery cell 20 is in the cylindrical shape as an example.

In some embodiments, the battery 100 may also include a bus component (not shown in the figure), and the plurality of battery cells 20 may be electrically connected to each other via the bus component, so that the plurality of battery cells 20 are connected in series, in parallel, or in a mixed connection.

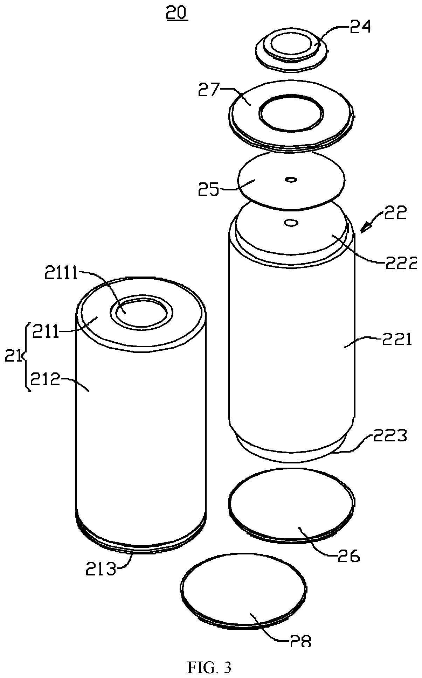

FIG. 3 is an exploded view of the battery cell 20 according to some embodiments of this application. The battery cell 20 includes a shell 21 and an electrode assembly 22, and the electrode assembly 22 is accommodated in the shell 21.

The electrode assembly 22 includes a first electrode plate (not shown in the figure), a second electrode plate (not shown in the figure), and a separator (not shown in the figure), and the separator is used to separate the first electrode plate from the second electrode plate. Polarity of the first electrode plate is opposite to polarity of the second electrode plate, in other words, one of the first electrode plate and the second electrode plate is a positive electrode plate, and the other of the first electrode plate and the second electrode plate is a negative electrode plate. The first electrode plate, the second electrode plate, and the separator are all of strip structures, and the first electrode plate, the second electrode plate, and the separator are stacked and coiled as one piece to form a coiled structure. The coiled structure may be a cylindrical structure, a flat structure, or a structure in another shape.

The positive electrode plate includes a positive current collector and a positive active material layer, and a surface of the positive current collector is coated with the positive active material layer. The positive current collector not coated with the positive active material layer protrudes compared with the positive current collector coated with the positive active material layer, and the positive current collector not coated with the positive active material layer serves as a positive electrode tab. Taking a lithium-ion battery as an example, a material of the positive electrode current collector may be aluminum, and a positive electrode active material may be lithium cobaltate, lithium iron phosphate, ternary lithium, lithium manganate, or the like. The negative electrode plate includes a negative current collector and a negative active material layer, and a surface of the negative current collector is coated with the negative active material layer. The negative current collector not coated with the negative active material layer protrudes compared with the negative current collector coated with the negative active material layer, and the negative current collector not coated with the negative active material layer serves as a negative electrode tab. A material of the negative electrode current collector may be copper, and a negative electrode active material may be carbon, silicon, or the like. In order to ensure that a high current is passed without fusing, there may be a plurality of positive tabs which are stacked together, and there may be a plurality of negative tabs which are stacked together. The separator may be made of polypropylene (PP), polyethylene (PE), or the like. In addition, the electrode assembly 22 may be of a coiled structure or a laminated structure, and embodiments of this application are not limited thereto.

The electrode assembly 22 includes a main body portion 221, a first tab 222, and a second tab 223, and the first tab 222 and the second tab 223 protrude from the main body portion 221. The first tab 222 is a portion of the first electrode plate not coated with an active material layer, and the second tab 223 is a portion of the second electrode plate not coated with an active material layer. The first tab 222 and the second tab 223 are used for extracting a current in the main body portion 221.

The first tab 222 and the second tab 223 may be located on the same side of the main body portion 221, which may be understood as that the first tab 222 and the second tab 223 are located at the same end of the electrode assembly 22 along a first direction. The first tab 222 and the second tab 223 may alternatively be located on two opposite sides of the main body portion 221, which may be understood as that the first tab 222 and the second tab 223 are located at two opposite ends of the electrode assembly 22 along a first direction. For the coiled electrode assembly 22, the first direction is parallel to a direction of a winding axis line of the electrode assembly 22.

Exemplarily, as shown in FIG. 3, in some embodiments, the shell 21 includes a bottom wall 211 and a side wall 212, and the bottom wall 211 encloses an outer periphery of the bottom wall 211. The shell 21 has an opening 213, and the opening 213 is provided opposite to the bottom wall 211. The electrode assembly 22 can enter the shell 21 via the opening 213. The battery cell 20 further includes an end cap 28, and the end cap 28 is used for capping the opening 213. The bottom wall 211 of the shell 21 is provided with an electrode extraction hole 2111. The battery cell 20 further includes an electrode terminal 24, the electrode terminal 24 is provided in the electrode extraction hole 2111 in an insulated manner, the electrode terminal 24 is used for electrically connecting to the first tab 222, and the electrode terminal 24 serves as a first output electrode of the battery cell 20. The electrode terminal 24 and the first tab 222 may be directly electrically connected or may be indirectly electrically connected via a first current collection member 25.

In an embodiment in which the first tab 222 and the second tab 223 are located at the same end of the electrode assembly 22 along the first direction, the second tab 223 is electrically connected to the bottom wall 211, and the bottom wall 211 serves as a second output electrode of the battery cell 20. A bus component may be located on the same side of the battery cell 20 in the first direction to enable a plurality of battery cells 20 to be connected in series and/or in parallel. In an embodiment in which the first tab 222 and the second tab 223 are located at the two opposite ends of the electrode assembly 22 along the first direction, the second tab 223 may be electrically connected to the end cap 28. The second tab 223 and the end cap 28 may be directly electrically connected or may be indirectly electrically connected via a second current collection member 26. The end cap 28 and the shell 21 may be electrically connected, so that the end cap 28 and the shell 21 may have identical polarity, or the end cap 28 and the shell 21 may alternatively be in an insulated connection.

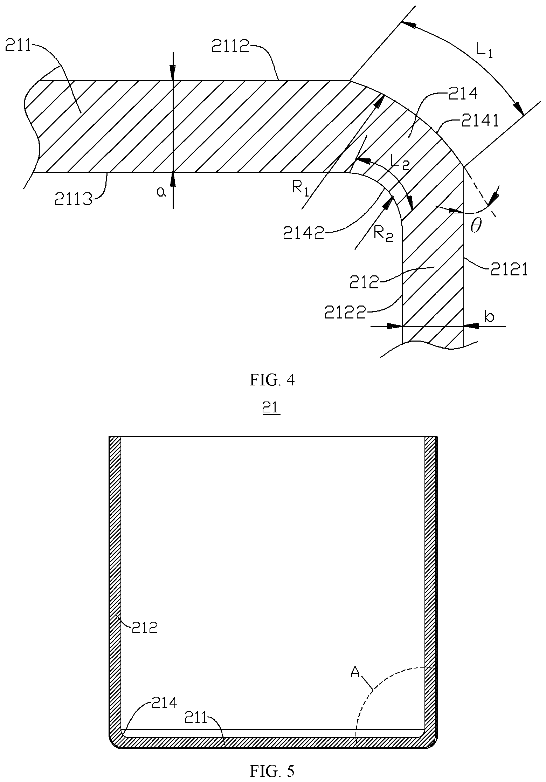

FIG. 4 shows a partial sectional view of a shell 21 according to an embodiment of this application. The shell 21 includes a bottom wall 211 and a side wall 212, where the side wall 212 encloses an outer periphery of the bottom wall 211, where an outer surface 2112 of the bottom wall and an outer surface 2121 of the side wall are connected by a first rounding surface 2141, a thickness of the bottom wall 211 is a, and a radius of the first rounding surface 2141 is R1 that satisfies: R1/a ≤ 10.

The thickness a of the bottom wall 211 is a distance between the outer surface 2112 of the bottom wall and an inner surface 2113 of the bottom wall along a thickness direction of the bottom wall 211. The "outer surface 2112 of the bottom wall" is a surface of the bottom wall 211 furthest away from the interior of the shell 21 along the thickness direction of the bottom wall 211. The "inner surface 2113 of the bottom wall" is a surface of the bottom wall 211 closest to the interior of the shell 21 along the thickness direction of the bottom wall 211.

The shell 21 further includes a transition wall 214, the side wall 212 encloses the outer periphery of the bottom wall 211, and the side wall 212 and the bottom wall 211 are connected by the transition wall 214. The side wall 212 encloses the outer periphery of the bottom wall 211, so that along the thickness direction of the bottom wall 211, a projection of the bottom wall 211 on the side wall 212 is located within space enclosed by the side wall 212. The first rounding surface 2141 is an outer surface of the transition wall 214, and the "outer surface of the transition wall 214" means a surface of the transition wall 214 furthest away from the interior of the shell 21 along a thickness direction of the transition wall 214. The "outer surface 2121 of the side wall" is a surface of the side wall 212 furthest away from the interior of the shell 21 along a thickness direction of the side wall 212.

The outer surface 2112 of the bottom wall and the outer surface 2121 of the side wall are connected by the first rounding surface 2141. The first rounding surface 2141 extends from the outer surface 2112 of the bottom wall to the outer surface 2121 of the side wall. If a ratio of the radius R1 of the first rounding surface 2141 to the thickness a of the bottom wall 211 is too large, accordingly, a size of a transition surface between the inner surface 2113 of the bottom wall and the inner surface 2122 of the side wall is large., which may be understood as that space of a corner between the bottom wall 211 and the side wall 212 is large. To avoid wrinkling of an electrode plate of an electrode assembly 22 caused by squeezing between the electrode assembly 22 and the corner, to avoid wrinkling of an electrode plate of an electrode assembly 22 caused by squeezing between the electrode assembly 22 and the corner, the electrode assembly 22 is often not in contact with a curved surface of the corner, and consequently the space of the corner is wasted, and consequently the space of the corner is wasted, and space inside the shell 21 cannot be fully utilized, which reduces energy density of the battery cell 20. As shown in Table 1, energy of the battery cell 20 is lower when R1/a is 15, and decreases with a large amplitude compared with energy that exists when R1/a is 1.2, 1.5, 5, or 10.

**Table 1 Comparison of energy values of the battery cell 20 corresponding to different R₁/a**

| Item | R₁/mm | a/mm | R₂/mm | R1/a | R angle molding | Battery energy/Wh |
|---|---|---|---|---|---|---|
| 1 | 0.53 | 0.3 | 0.2 | 1.77 | The bottom is deformed and it is difficult for stamping and molding | / |
| 2 | 0.4 | 0.4 | 0 | 1.00 | The bottom is deformed and it is difficult for stamping and molding | / |
| 3 | 0.44 | 0.4 | 0.2 | 1.1 | The bottom is deformed and it is difficult for stamping and molding | / |
| 4 | 0.48 | 0.4 | 0.2 | 1.2 | R₁ and R₂ angles can be normally molded | 94 |
| 5 | 0.6 | 0.4 | 0.2 | 1.50 | R₁ and R₂ angles can be normally molded | 93 |
| 6 | 2 | 0.4 | 1.6 | 5.00 | R₁ and R₂ angles can be normally molded | 91 |
| 7 | 4 | 0.4 | 3.6 | 10.00 | R₁ and R₂ angles can be normally molded | 89 |
| 8 | 6 | 0.4 | 5.6 | 15.00 | R₁ and R₂ angles can be normally molded | 85 |
| 9 | 0.6 | 0.6 | 0 | 1.00 | The bottom is deformed and it is difficult for stamping and molding | / |
| 10 | 0.66 | 0.6 | 0.2 | 1.1 | The bottom is deformed and it is difficult for stamping and molding | / |
| 11 | 0.72 | 0.6 | 0.2 | 1.2 | R₁ and R₂ angles can be normally molded | 94 |
| 12 | 0.9 | 0.6 | 0.3 | 1.50 | R₁ and R₂ angles can be normally molded | 94 |
| 13 | 3 | 0.6 | 2.4 | 5.00 | R₁ and R₂ angles can be normally molded | 91 |
| 14 | 6 | 0.6 | 5.4 | 10.00 | R₁ and R₂ angles can be normally molded | 88 |
| 15 | 9 | 0.6 | 8.4 | 15.00 | R₁ and R₂ angles can be normally molded | 85 |
| 16 | 0.8 | 0.8 | 0 | 1.00 | The bottom is deformed and stamping cannot be performed | / |
| 17 | 0.88 | 0.8 | 0.4 | 1.1 | The bottom is deformed and it is difficult for stamping and molding | / |
| 18 | 0.96 | 0.8 | 0.4 | 1.2 | R₁ and R₂ angles can be normally molded | 93 |
| 19 | 1.2 | 0.8 | 0.4 | 1.50 | R₁ and R₂ angles can be normally molded | 93 |
| 20 | 4 | 0.8 | 3.2 | 5.00 | R₁ and R₂ angles can be normally molded | 90 |
| 21 | 8 | 0.8 | 7.2 | 10.00 | R₁ and R₂ angles can be normally molded | 86 |
| 22 | 12 | 0.8 | 11.2 | 15.00 | R₁ and R₂ angles can be normally molded | 81 |
| 23 | 1 | 1 | 0 | 1.00 | The bottom is deformed and it is difficult for stamping and molding | / |
| 24 | 1.1 | 1 | 0.5 | 1.1 | The bottom is deformed and it is difficult for stamping and molding | / |
| 25 | 1.2 | 1 | 0.5 | 1.2 | R₁ and R₂ angles can be normally molded | 93 |
| 26 | 1.5 | 1 | 0.5 | 1.50 | R₁ and R₂ angles can be normally molded | 93 |
| 27 | 5 | 1 | 4 | 5.00 | R₁ and R₂ angles can be normally molded | 89 |
| 28 | 10 | 1 | 9 | 10.00 | R₁ and R₂ angles can be normally molded | 87 |
| 29 | 15 | 1 | 14 | 15.00 | R₁ and R₂ angles can be normally molded | 78 |

When R₁/a is 1.2, 1.5, 5, or 10, although the energy of the battery cell 20 fluctuates to some extent, a fluctuation amplitude is small and the energy is higher compared with the energy that exists when R₁/a is 15.

Therefore, in this application, as R₁/a ≤ 10, the size of the transition surface between the inner surface 2113 of the bottom wall and the inner surface 2122 of the side wall can be within a reasonable range, so that a size of the space of the corner between the bottom wall 211 and the side wall 212 is within a reasonable range, thereby avoiding excessive waste of the space inside the shell 21, and helping increase the energy density of the battery cell 20. Thus, the battery cell 20 can have higher energy.

For example, R1/a may be 1.5, 5, or 10.

Stamping is a processing method with high production efficiency and low material consumption. Therefore, stamping and molding are often used for the shell 21. Still referring to Table 1, when R₁/a<1.2, if stamping and molding are used for the shell 21, a material at the transition wall 214 is squeezed toward the bottom wall 211, which causes deformation of the bottom wall 211, and it is difficult for stamping and molding, or even it is impossible to implement stamping.

Based on the above considerations, in some embodiments, R₁/a ≥ 1.2.

Therefore, as R₁/a ≥ 1.2, material accumulation at a transition position between the inner surface 2122 of the side wall and the inner surface 2122 of the side wall can be reduced or avoided, and a risk of deformation of the bottom wall 211 caused by excessive material accumulation at the transition position between the inner surface 2122 of the side wall and the inner surface 2122 of the side wall and by squeezing toward a side of the bottom wall 211.

In some embodiments, 0.8 mm ≤ R₁ ≤ 12 mm.

If a value of R₁ is too small, process requirements are high and it is difficult for molding; if an angle of R₁ is too large, the space of the corner of the shell is large, and the space is excessively wasted, which affects the energy density of the battery cell. For example, R1 may be 0.88 mm, 0.9 mm, 0.96 mm, 1.2 mm, 4 mm, 8 mm, 9 mm, 10 mm, or the like.

Therefore, the first rounding surface 2141 satisfies: 0.8 mm ≤ R₁ ≤ 12 mm, which facilitates processing and manufacturing, and enables a molded shell 21 to meet practical application requirements.

In some embodiments, 1 mm ≤ R₁ ≤ 1.5 mm.

For example, the value of R1 may be 1.1 mm, 1.2 mm, 1.3 mm, 1.4 mm, or the like.

The first rounding surface 2141 satisfies: 1 mm ≤ R₁ ≤ 1.5 mm, which further facilitates processing and manufacturing of the first rounding surface 2141, and enables the molded shell 21 to meet practical application requirements.

In some embodiments, 0.4 mm ≤ a ≤ 1 mm.

For example, Table 1 shows cases in which a is 0.4 mm, 0.6 mm, 0.8 mm, or 1 mm. In other embodiments, a may alternatively be another value. For example, a is 0.5 mm, 0.7 mm, or 0.9 mm.

The thickness a of the bottom wall 211 satisfies: 0.4 mm ≤ a ≤ 1 mm, which can ensure that the shell 21 has good structural strength and facilitates formation of the first rounding surface 2141.

In some embodiments, an arc length of the first rounding surface 2141 is L₁ that satisfies: 1.5 mm ≤ L₁ ≤ 4.7 mm.

The "arc length of the first rounding surface 2141" is a length of the first rounding surface 2141 extending from the outer surface 2112 of the bottom wall toward the outer surface 2121 of the side wall. For example, L₁ may be 2 mm, 2.5 mm, 3 mm, 3.2 mm, 3.8 mm, or 4 mm.

The arc length L₁ of the first rounding surface 2141 satisfies: 1.5 mm ≤ L₁ ≤ 4.7 mm, which facilitates processing and molding of the first rounding surface 2141.

In some embodiments, the first rounding surface 2141 has a first end portion connected to the outer surface 2121 of the side wall, and an angle between a tangent plane of the first end portion of the first rounding surface 2141 and the outer surface 2121 of the side wall is θ that satisfies: θ ≤ 30°.

In this embodiment, after the shell 21 is stamped and molded, an angle between the bottom wall 211 and the side wall 212 is 90°. A thickness b of the side wall 212 is different from the thickness a of the bottom wall 211. For example, the thickness b of the side wall 212 is less than the thickness a of the bottom wall 211. In this case, the tangent plane of the first end portion and the outer surface 2121 of the side wall are arranged with an included angle, and a connection position between the first rounding surface 2141 and the outer surface 2121 of the side wall form a sharp angle. A larger angle between the tangent plane of the first end portion and the outer surface 2121 of the side wall indicates a more protrudent sharp angle, which easily leads to scratching of the shell 21.

Therefore, the angle between the tangent plane of the first end portion of the first rounding surface 2141 and the outer surface 2121 of the side wall is less than or equal to 30°, so that the sharp angle between the first rounding surface 2141 and the outer surface 2121 of the side wall is reduced, thereby providing good smoothness between the first rounding surface 2141 and the outer surface 2121 of the side wall, and reducing a risk of scratching of the shell 21. θ may be 0°, 10°, or 15°. When θ is 0°, the outer surface 2121 of the side wall is tangent to the first end portion, and there is no sharp angle but a smooth transition between the first end portion and the outer surface 2121 of the side wall.

In some embodiments, the first rounding surface 2141 further has a second end portion connected to the outer surface 2112 of the bottom wall, and the outer surface 2112 of the bottom wall is tangent to the second end portion. That is, the outer surface 2112 of the bottom wall is a tangent plane of the second end portion, and there is no sharp angle but a smooth transition between the second end portion and the outer surface 2112 of the bottom wall.

In some embodiments, the thickness of the side wall 212 is b that satisfies: 0.2 mm ≤ b ≤ 0.8 mm.

For example, b may be 0.4 mm, 0.45 mm, 0.5 mm, 0.6 mm, 0.7 mm, or the like.

The thickness b of the side wall 212 satisfies: 0.2 mm ≤ b ≤ 0.8 mm, which can ensure that the side wall 212 of the shell 21 has good structural strength.

Still referring to FIG. 4, in some embodiments, the inner surface 2113 of the bottom wall and the inner surface 2122 of the side wall are connected by a second rounding surface 2142.

The second rounding surface 2142 is an inner surface of the transition wall 214, which may be understood as that the transition wall 214 is a rounded wall. The "inner surface of the transition wall 214" is a surface of the transition wall 214 closest to the interior of the shell 21 along the thickness direction of the transition wall 214. The "inner surface 2122 of the side wall" is a surface of the side wall 212 closest to the interior of the shell 21 along the thickness direction of the side wall 212.

The inner surface 2113 of the bottom wall and the inner surface 2122 of the side wall are connected by the second rounding surface 2142, so that the bottom wall 211 and the side wall 212 can have the smooth transition, and a risk of stress concentration is reduced.

In some embodiments, a radius of the second rounding surface 2142 is R₂, where 0.4 mm ≤ R₂ ≤ 1.2 mm.

A value of R₂ may be 0.5 mm, 0.6 mm, 0.8 mm, 1 mm, or the like.

The radius R₂ of the second rounding surface 2142 satisfies 0.4 mm ≤ R₂ ≤ 1.2 mm, which facilitates processing and molding of the second rounding surface 2142, and enables the size of the space of the corner between the bottom wall 211 and the side wall 212 to be within a reasonable range, so as to avoid waste of the space inside the shell 21.

In some embodiments, 0.5 mm ≤ R₂ ≤ 1 mm.

For example, R₂ may be 0.55 mm, 0.65 mm, 0.7 mm, 0.75 mm, 0.85 mm, 0.9 mm, 0.95 mm, or the like.

Therefore, the radius R₂ of the second rounding surface 2142 satisfies 0.5 mm ≤ R₂ ≤ 1 mm, which facilitates processing and molding of the second rounding surface 2142, and further reduces the size of the space of the corner between the bottom wall 211 and the side wall 212, so as to avoid waste of the space inside the shell 21, thereby increasing the energy of the battery cell 20.

In some embodiments, an arc length of the second rounding surface 2142 is L₂ that satisfies: 0.7 mm ≤ L₂ ≤ 3.2 mm.

The "arc length of the second rounding surface 2142" is a length of the second rounding surface 2142 extending from the inner surface 2113 of the bottom wall toward the inner surface 2122 of the side wall. For example, L₂ may be 1 mm, 1.3 mm, 1.8 mm, 2.2 mm, 2.8 mm, or 3 mm.

The arc length L₂ of the second rounding surface 2142 satisfies: 0.7 mm ≤ L₂ ≤ 3.2 mm, so that processing of the second rounding surface 2142 is easier.

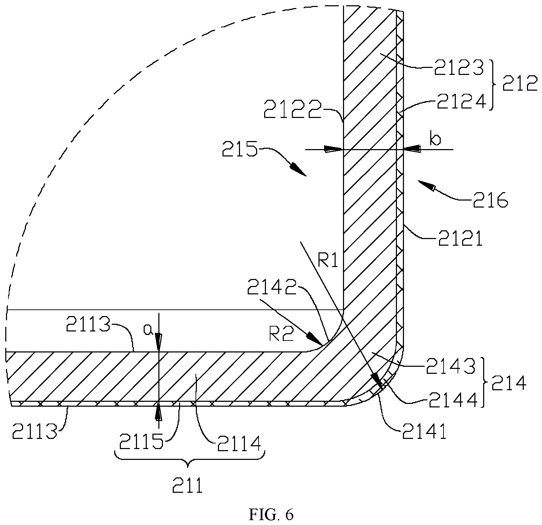

As shown in FIG. 5 and FIG. 6, in some embodiments, the shell 21 includes a main body layer 215 and an antioxidant layer 216, and the antioxidant layer 216 is provided on an outer surface of the main body layer 215.

The main body layer 215 is a main structure of the shell 21, and a material of the main body layer 215 needs to enable the shell 21 to have good strength and stiffness. For example, the material of the main body layer 215 is steel. The antioxidant layer 216 is formed by a material with good antioxidant performance. For example, the antioxidant layer 216 may be made of nickel, tin, or gold. The antioxidant layer 216 may be provided on the outer surface of the main body layer 215 in a manner of plating, coating, pasting, or the like.

The antioxidant layer 216 may be provided on the surface of the main body layer 215 before the main body layer 215 is stamped, or may be provided on the surface of the main body layer 215 after the main body layer 215 is stamped.

The transition wall 214 includes a first main body layer 2143 and a first antioxidant layer 2144, the first antioxidant layer 2144 is provided on an outer surface of the first main body layer 2143, and the first rounding surface 2141 is formed on a surface of the first antioxidant layer 2144 facing away from the first main body layer 2143.

The bottom wall 211 includes a second main body layer 2114 and a second antioxidant layer 2115, the second main body layer 2114 is connected to the first main body layer 2143, the second antioxidant layer 2115 is provided on an outer surface of the second main body layer 2114 and is connected to the first antioxidant layer 2144, and the outer surface 2112 of the bottom wall is formed on a surface of the second antioxidant layer 2115 facing away from the second main body layer 2114. The thickness a of the bottom wall 211 is a sum of a thickness of the second main body layer 2114 and a thickness of the second antioxidant layer 2115.

The side wall 212 includes a third main body layer 2123 and a third antioxidant layer 2124, the third main body layer 2123 is connected to the first main body layer 2143, the third antioxidant layer 2124 is provided on an outer surface of the third main body layer 2123 and is connected to the first antioxidant layer 2144, and the outer surface 2121 of the side wall is formed on a surface of the third antioxidant layer 2124 facing away from the third main body layer 2123. The thickness b of the side wall 212 is a sum of a thickness of the third main body layer 2123 and a thickness of the third antioxidant layer 2124.

The first main body layer 2143, the second main body layer 2114, and the third main body layer 2123 together form the main body layer 215 of the shell 21, and the first main body layer 2143, the second main body layer 2114, and the third main body layer 2123 are molded as one piece. The first antioxidant layer 2144, the second antioxidant layer 2115, and the third antioxidant layer 2124 together form the antioxidant layer 216 of the shell 21.

The antioxidant layer 216 is provided on the outer surface of the main body layer 215, so as to provide the main body layer 215 with good antioxidant performance, thereby improving an anti-corrosion capability of the shell 21.

In an embodiment in which the antioxidant layer 216 is provided on the surface of the main body layer 215 before the main body layer 215 is stamped, the antioxidant layer 216 stretches at the transition wall 214 during stamping, and the antioxidant layer 216 cracks in a severe situation. Therefore, in some embodiments, the first rounding surface 2141 is formed on an outer surface of the antioxidant layer 216, and the second rounding surface 2142 is formed on an inner surface of the main body layer 215; and the arc length Li of the first rounding surface 2141 and the arc length L₂ of the second rounding surface 2142 satisfy: 1 ≤ L₁/L₂ ≤ 1.6.

An extension amount of the second rounding surface 2142 during stamping is small and negligible, which may be understood as that an arc length of the second rounding surface 2142 after stamping is equal to an original length of the second rounding surface 2142 before stamping. Before stamping, a length of the first rounding surface 2141 in an original state is equal to the original length of the second rounding surface 2142, so that an original length of the first rounding surface 2141 can equate to the arc length of the second rounding surface 2142. L₁/L₂ may be understood as a ratio of a length of the first rounding surface 2141 after stamping to a length of the first rounding surface 2141 before stamping, and it can be learned that the extension amount of the first rounding surface 2141 ranges from 0 to 0.6, that is, 0 ≤ (L₁-L₂)/L₂ ≤ 0.6.

The arc length L1 of the first rounding surface 2141 and the arc length L2 of the second rounding surface 2142 satisfy 1 ≤ L₁/L₂ ≤ 1.6, which can ensure that the antioxidant layer 216 does not crack during molding of the first rounding surface 2141 and the second rounding surface 2142.

In some embodiments, the shell 21 is of a cylindrical structure. Then, the formed battery cell 20 is a cylindrical battery cell 20.

The size of the space of the corner between the bottom wall 211 and the side wall 212 of the shell 21 of the cylindrical structure is within a reasonable range, thereby avoiding excessive waste of the space inside the shell 21, and helping increase the energy density of the battery cell 20.

Embodiments of this application further provide a battery cell 20. The battery cell 20 includes the shell 21 and the electrode assembly 22 according to any one of the above embodiments, and the electrode assembly 22 is accommodated within the shell 21.

In this embodiment, the battery cell 20 is a cylindrical battery cell 20.

A size of space of a corner between a bottom wall 211 and a side wall 212 of a shell 21 of the battery cell 20 with the shell 21 according to any embodiment of the first aspect is within a reasonable range, thereby avoiding excessive waste of space inside the shell 21, and helping increase energy density of the battery cell 20.

In some embodiments, the shell 21 has an opening 213 provided opposite to the bottom wall 211. The battery cell 20 further includes an end cap 28, and the end cap 28 is used for capping the opening 213.

In an embodiment in which the shell 21 is of a cylindrical structure, the bottom wall 211 and the opening 213 are provided at two ends of the shell 21 along an axial direction respectively, and the opening 213 is enclosed by the side wall 212. The electrode assembly 22 can enter the shell 21 via the opening 213. The opening 213 is then capped with the end cap 28. The end cap 28 may be electrically connected to the shell 21 or may be connected via an insulating member.

The shell 21 is provided with the opening 213, to facilitate assembly of the electrode assembly 22 into the shell 21. After the electrode assembly 22 is accommodated in the shell 21, the opening 213 can be capped by the end cap 28 to improve sealing and security of the battery cell 20.

In some embodiments, the battery cell 20 further includes an electrode terminal 24, the bottom wall 211 is provided with an electrode extraction hole 2111, the electrode terminal 24 is provided in the electrode extraction hole 2111 in an insulated manner, the electrode terminal 24 is used for electrically connecting to a first tab 222 of the electrode assembly 22, the bottom wall 211 is electrically connected to a second tab 223 of the electrode assembly 22, and polarity of the first tab 222 is opposite to that of the second tab 223.

In some embodiments, the electrode terminal 24 may be located within the electrode extraction hole 2111. In other embodiments, the electrode terminal 24 and the electrode extraction hole 2111 may alternatively have another relative position relationship. For example, the electrode terminal 24 is located on a side of the end cap 28facing the electrode assembly 22, and a projection of the electrode terminal 24 on the end cap 28 is located within the electrode extraction hole 2111 along a thickness direction of the end cap 28, so that the electrode terminal 24 can be exposed to the outside through the electrode extraction hole 2111, to facilitate an electrical connection between the electrode terminal 24 and another device.

The first tab 222 and the second tab 223 may be located on the same side of the electrode assembly 22 or two opposite sides of the electrode assembly 22.

The electrode terminal 24 is electrically connected to the first tab 222 and serves as a first output electrode of the battery cell 20, the second tab 223 of which polarity is opposite to that of the first tab 222 is electrically connected to the bottom wall 211 to enable the bottom wall 211 to serve as a second output electrode of the battery cell 20, and the bottom wall 211 and the electrode terminal 24 are located at the same end of the battery cell 20. In this way, the first tab 222 and the second tab 223 can be located at the same side of the battery cell 20, which simplifies an assembly process and improves efficiency of connecting a plurality of battery cells 20 in series, in parallel, or in a mixed connection as a battery module.

In order to implement a case in which the electrode terminal 24 is provided in the electrode extraction hole 2111 in an insulated manner, the battery cell 20 further includes a first insulating member 27, and the first insulating member 27 is provided between the bottom wall 211 and the electrode terminal 24.

Embodiments of this application further provide a battery 100, and the battery 100 includes the battery cell 20 according to any one of the above embodiments.

Embodiments of this application further provide an electric device, and the electric device includes the battery cell 20 according to any one of the above embodiments.

Embodiments of this application provide a cylindrical shell 21 of a cylindrical battery 100, the cylindrical shell 21 includes a bottom wall 211, a side wall 212, and a curved transition wall 214, and the bottom wall 211 and the side wall 212 are connected by the curved transition wall 214. An outer surface of the transition wall 214 is a first rounding surface 2141, and an inner surface of the transition wall 214 is a second rounding surface 2142. An outer surface 2112 of the bottom wall and an outer surface 2121 of the side wall are connected by the first rounding surface 2141, and an inner surface 2113 of the bottom wall and an inner surface 2122 of the side wall are connected by the second rounding surface 2142. A thickness of the bottom wall 211 is a, and a radius of the first rounding surface 2141 is R₁ that satisfies 1.2 ≤ R₁/a ≤ 10.

As R1/a ≤ 10, a size of a transition surface between the inner surface 2113 of the bottom wall and the inner surface 2122 of the side wall can be within a reasonable range, so that a size of space of a corner between the bottom wall 211 and the side wall 212 is within a reasonable range, thereby avoiding excessive waste of space inside the shell 21, and helping increase energy density of the battery cell 20. As R₁/a ≥ 1.2, material accumulation at a transition position between the inner surface 2122 of the side wall and the inner surface 2122 of the side wall can be reduced or avoided, and a risk of deformation of the bottom wall 211 caused by excessive material accumulation at the transition position between the inner surface 2122 of the side wall and the inner surface 2122 of the side wall and by squeezing toward a side of the bottom wall 211 can also be reduced.

The radius R₁ of the first rounding surface 2141 satisfies: 1 mm ≤ R₁ ≤ 1.5 mm, so that the first rounding surface 2141 can not only be stamped and molded normally, but the battery cell 20 also has large energy.

The thickness a of the bottom wall 211 satisfies: 0.4 mm ≤ a ≤ 1 mm, which can ensure that the shell 21 has good structural strength and facilitates formation of the first rounding surface 2141.

An arc length of the first rounding surface 2141 is L₁ that satisfies: 1.5 mm ≤ L₁ ≤ 4.7 mm, which facilitates processing and molding of the first rounding surface 2141.

An angle θ between the outer surface 2121 of the side wall and a tangent plane of a first end portion of the first rounding surface for connecting to the outer surface 2121 of the side wall is less than or equal to 30°, so that a sharp angle between the first rounding surface 2141 and the outer surface 2121 of the side wall is reduced, thereby providing good smoothness between the first rounding surface 2141 and the outer surface 2121 of the side wall, and reducing a risk of scratching of the shell 21.

A radius of the second rounding surface 2142 is R₂, and 0.5 mm ≤ R₂ ≤ 1 mm, which facilitates processing and molding of the second rounding surface 2142, and enables the size of the space of the corner between the bottom wall 211 and the side wall 212 to be within a reasonable range, so as to avoid waste of the space inside the shell 21.

An arc length of the second rounding surface 2142 is L₂ that satisfies: 0.7 mm ≤ L₂ ≤ 3.2 mm, so that processing of the second rounding surface 2142 is easier.

The shell 21 includes a main body steel layer and a nickel layer, and the nickel layer is plated on an outer surface of the main body steel layer. After the nickel layer is plated on the surface of the main body steel layer to form a composite structure, the composite structure is stamped to form the shell 21, and the nickel layer is provided on the outer surface of the main body steel layer. The first rounding surface 2141 is formed on an outer surface of the nickel layer, and the second rounding surface 2142 is formed on an inner surface of the main body steel layer. The arc length L₁ of the first rounding surface 2141 and the arc length L₂ of the second rounding surface 2142 satisfy: 1 ≤ L₁/L₂ ≤ 1.6, which can ensure that an antioxidant layer 216 does not crack during molding of the first rounding surface 2141 and the second rounding surface 2142.

The above is only a preferred embodiment of this application, and is not intended to limit this application, and this application is subject to various changes and variations for a person skilled in the art. Any modifications, equivalent replacements, improvements, and the like made within the spirit and principles of this application shall fall within the scope of protection of this application.

## Claims

1. A shell, comprising:
a bottom wall; and
a side wall, enclosing an outer periphery of the bottom wall, wherein
an outer surface of the bottom wall and an outer surface of the side wall are connected by a first rounding surface, a thickness of the bottom wall is a, and a radius of the first rounding surface is R₁ that satisfies: R1/a ≤ 10.

2. The shell according to claim 1, wherein R₁/a ≥ 1.2.

3. The shell according to claim 1, wherein 0.8 mm ≤ R₁ ≤ 12 mm.

4. The shell according to claim 3, wherein 1 mm ≤ R₁ ≤ 1.5 mm.

5. The shell according to claim 1, wherein 0.4 mm ≤ a ≤ 1 mm.

6. The shell according to claim 1, wherein an arc length of the first rounding surface is L₁ that satisfies: 1.5 mm ≤ L₁ ≤ 4.7 mm.

7. The shell according to any one of claims 1 to 6, wherein the first rounding surface has a first end portion connected to the outer surface of the side wall, and an angle between a tangent plane of the first end portion of the first rounding surface and the outer surface of the side wall is θ that satisfies: θ ≤ 30°.

8. The shell according to any one of claims 1 to 7, wherein a thickness of the side wall is b that satisfies: 0.2 mm ≤ b ≤ 0.8 mm.

9. The shell according to any one of claims 1 to 8, wherein an inner surface of the bottom wall and an inner surface of the side wall are connected by a second rounding surface.

10. The shell according to claim 9, wherein a radius of the second rounding surface is R₂, and 0.4 mm ≤ R₂ ≤ 1.2 mm.

11. The shell according to claim 10, wherein 0.5 mm ≤ R₂ ≤ 1 mm.

12. The shell according to any one of claims 9 to 11, wherein an arc length of the second rounding surface is L₂ that satisfies: 0.7 mm ≤ L₂ ≤ 3.2 mm.

13. The shell according to any one of claims 1 to 12, wherein the shell comprises a main body layer and an antioxidant layer, and the antioxidant layer is provided on an outer surface of the main body layer.

14. The shell according to claim 13, wherein the inner surface of the bottom wall and the inner surface of the side wall are connected by the second rounding surface, the first rounding surface is formed on an outer surface of the antioxidant layer, and the second rounding surface is formed on an inner surface of the main body layer; and
the arc length L1 of the first rounding surface and the arc length L₂ of the second rounding surface satisfy: 1 ≤ L₁/L₂ ≤ 1.6.

15. The shell according to claim 1, wherein the shell is of a cylindrical structure.

16. A battery cell, comprising:
the shell according to any one of claims 1 to 15; and
an electrode assembly accommodated in the shell.

17. The battery cell according to claim 16, wherein the shell has an opening provided opposite to a bottom wall; and
the battery cell further comprises an end cap, and the end cap is used for capping the opening.

18. The battery cell according to claim 17, wherein the battery cell further comprises an electrode terminal, the bottom wall is provided with an electrode extraction hole, the electrode terminal is provided in the electrode extraction hole in an insulated manner, the electrode terminal is used for electrically connecting to a first tab of the electrode assembly, the bottom wall is electrically connected to a second tab of the electrode assembly, and polarity of the first tab is opposite to that of the second tab.

19. A battery, comprising the battery cell according to any one of claims 16 to 18.

20. An electric device, comprising the battery cell according to any one of claims 16 to 18.
